# EUROPEAN PATENT APPLICATION

(11) **EP 4 403 062 A1**
(43) Date of publication of application: **24.07.2024**
(21) Application number: 23164878.3
(22) Date of filing: 29.03.2023
(51) Int. Cl.: A43B 1/04, A43B 23/04, B29D 35/06

(54) **SHOE ARTICLE, METHOD AND APPARATUS FOR MANUFACTURING THE SAME**

(30) Priority: 19.01.2023 TW 112102609
(71) Applicant: Prime Luck International Limited, Apia (WS)
(72) Inventor: YAO, Chih-Liang, 106 Taipei (TW); CHEN, Pei-Ru, 106 Taipei (TW); CHUNG, Yu-Hsi, 106 Taipei (TW)
(74) Representative: MERH-IP Matias Erny Reichl Hoffmann Patentanwälte PartG mbB

(57) **Abstract**

A method for manufacturing a shoe article is disclosed. The method includes a material preparing step, a heat pressing step, a cooling step, and a separating step. The material preparing step includes providing a shoe-shaped knitted object having a shoe bottom face, providing a frame having a plurality of middle frame holes, and filling particles of a foam material in the middle frame holes. The heat pressing step includes simultaneously heating the particles of the foam material to become a semi-solid state foam material, and applying a force to make the foam material substantially apply pressure onto the shoe bottom face. The cooling step includes solidifying the semi-solid state foam material to form a plurality of foam structures connected with the shoe bottom face in positions corresponding to the cavities. The separating step includes making the foam structures and the shoe-shaped knitted object separate from the frame together.

## Description

### TECHNICAL FIELD

The present disclosure relates to a shoe article and a method and apparatus for manufacturing the same.

### BACKGROUND

It is known that a shoe article generally includes a vamp and a sole. The vamp is fixed to the sole and forms a space on the inside of the shoe article to accommodate a foot. The sole is located between the vamp and the ground to provide protection for the bottom surface of the foot. For sports shoes, the soles may further include midsoles and outsoles. The midsole is generally made of an elastic foam material to reduce the pressure on the foot and the leg during sports. In addition, the midsole may further include a fluidfilled cavity, a thin plate, a regulator or other elements to enhance the performance thereof. The outsole is arranged on the lower surface of the midsole and is generally made of a wear-resistant material such as rubber as a portion of the shoe article in contact with the ground. The vamp, the midsole and the outsole are generally adhered using an adhesive. However, the adhesive may fail to cause separation between the components. In addition, assembling a plurality of components is generally time-consuming and error-prone, while shoe articles with more components are difficult to recycle. Therefore, by reducing the number of components used in the shoe article, waste will be reduced and the manufacturing efficiency and reusability of the shoe article will be increased.

On the other hand, in order to meet different needs of users, manufacturers need to produce shoe articles with different forms of vamps and soles. However, according to this method, it not only increases inventory, but also causes burden to the environment, and can only meet general requirements of different people (such as size, sports type), and it is difficult to meet individual differentiation requirements.

### SUMMARY

An objective of the present disclosure is to provide a method for manufacturing a shoe article, which can improve the durability of the shoe article.

Another objective of the present disclosure is to provide a method for manufacturing a shoe article, which can improve the manufacturing efficiency.

Another objective of the present disclosure is to provide a method for manufacturing a shoe article, which can improve the reusability of the shoe article.

Another objective of the present disclosure is to provide a method for manufacturing a shoe article, which can meet the individual differentiation requirements.

Another objective of the present disclosure is to provide a shoe article with better durability.

Another objective of the present disclosure is to provide a shoe article with better recyclability.

Another objective of the present disclosure is to provide an apparatus for manufacturing a shoe article, which can improve the manufacturing efficiency.

The method for manufacturing a shoe article according to the present disclosure includes a material preparing step, a heat pressing step, a cooling step, and a separating step.

In an embodiment of the present disclosure, the material preparing step includes providing a shoe-shaped knitted object having a shoe bottom face, providing a frame having a plurality of middle frame holes, and filling particles of a foam material in the middle frame holes. The heat pressing step includes simultaneously heating at least one of the frame and the shoe-shaped knitted object after the material preparing step to make particles of a foam material become a semi-solid state foam material, and applying a force to make the semi-solid state foam material substantially apply pressure onto the shoe bottom face. The cooling step includes cooling the frame and the shoe-shaped knitted object after the heat pressing step to solidify the semi-solid state foam material to form a plurality of foam structures connected with the shoe bottom face in positions corresponding to cavities on the shoe bottom face, the foam structures being separated from each other. The separating step includes applying a force to at least one of the frame and the shoe-shaped knitted object to move away from the other, and making the foam structures and the shoe-shaped knitted object separate from the frame together.

In an embodiment of the present disclosure, the material preparing step includes providing the shoe-shaped knitted object having the shoe bottom face facing upward, providing the frame, and filling the particles of the foam material in the cavities. The frame includes a middle frame and a convex column module. The middle frame is arranged above the shoe-shaped knitted object and includes a frame supporting surface facing the shoe bottom face and a plurality of middle frame holes formed in the frame supporting surface, where the frame supporting surface is abutted against the shoe bottom face, so that one end of each middle frame hole close to the shoe-shaped knitted object is closed by the shoe bottom face to form a plurality of cavities. The convex column module is arranged above the middle frame and includes a plurality of convex columns, each convex column corresponds to one of the middle frame holes, the height of each convex column is smaller than the depth of the corresponding middle frame hole, and the convex column module is movable relative to the middle frame, so that the convex columns can respectively extend into or leave the corresponding middle frame holes. The heat pressing step includes simultaneously heating at least one of the frame and the shoe-shaped knitted object after the material preparing step to make the particles of the foam material become the semi-solid state foam material, and applying a force to at least one of the convex column module and the shoe-shaped knitted object to approach the other, so that the convex column is close to the shoe bottom face. The cooling step includes cooling the frame and the shoe-shaped knitted object after the heat pressing step to solidify the semi-solid state foam material to form a plurality of foam structures connected with the shoe bottom face in positions corresponding to cavities on the shoe bottom face, the foam structures being separated from each other. The separating step includes applying a force to at least one of the frame and the shoe-shaped knitted object to move away from the other, and making the foam structures and the shoe-shaped knitted object separate from the frame together.

In an embodiment of the present disclosure, the material preparing step includes providing the frame having the frame supporting surface including a plurality of cavities separated from each other, filling the particles of the foam material in the plurality of cavities, and providing the shoe-shaped knitted object. The shoe-shaped knitted object includes a shoe bottom face, and is arranged above the frame supporting surface, and the shoe bottom face facing the frame supporting surface. The heat pressing step includes simultaneously heating at least one of the frame and the shoe-shaped knitted object after the material preparing step to make the particles of the foam material become the semi-solid state foam material, and applying a force to at least one of the frame and the shoe-shaped knitted object to approach the other, so that the shoe bottom face is in contact with at least a part of the foam material. The cooling step includes cooling the frame and the shoe-shaped knitted object after the heat pressing step to solidify the semi-solid state foam material to form the plurality of foam structures connected with the shoe bottom face in positions corresponding to the cavities on the shoe bottom face, the plurality of foam structures being separated from each other. The separating step includes applying a force to at least one of the frame and the shoe-shaped knitted object to move away from the other, and making the foam structures and the shoe-shaped knitted object separate from the frame together.

In an embodiment of the present disclosure, the frame supporting surface includes a supporting concave part, and the cavities are formed in the supporting concave part.

In an embodiment of the present disclosure, the frame includes the middle frame and the convex column module. The middle frame includes the frame supporting surface and the plurality of middle frame holes formed in the frame supporting surface. The convex column module is arranged on the other side of the middle frame relative to a foot-shaped supporting member and includes a plurality of convex columns, each convex column corresponds to one of the holes, and the height of each convex column is smaller than the depth of the corresponding hole. The middle frame is movable relative to the convex column module, so that the convex columns can respectively extend into the corresponding middle frame holes to form the cavities, or the convex columns are separated from the middle frame holes.

In an embodiment of the present disclosure, the frame further includes an elastic apparatus which is arranged between the middle frame and the convex column module and provides an upward elastic force to support the middle frame and the convex column module to keep a first distance, and the convex columns respectively extend into the corresponding middle frame holes.

In an embodiment of the present disclosure, the heat pressing step includes: applying a downward thrust force which is larger than the upward elastic force to the shoe-shaped knitted object, so that the shoe-shaped knitted object is abutted against the middle frame, the middle frame is pushed to ensure that the distance between the middle frame and the convex column module is smaller than the first distance, and the convex columns respectively extend into the corresponding middle frame holes. The separating step includes: removing the downward thrust force, pushing the middle frame to move to a position where the middle frame reaches the first distance from the convex column module by the upward elastic force, and enabling the foam structures to leave the convex columns.

In an embodiment of the present disclosure, the step of providing the shoe-shaped knitted object includes providing a foot-shaped supporting member having a supporting member bottom surface, and sleeving the shoe-shaped knitted object over the foot-shaped supporting member, and the shoe bottom face being outside the supporting member bottom surface.

In an embodiment of the present disclosure, the foam material is selected from the group consisting of thermoplastic polyurethane (TPU), thermoplastic polyester elastomer (TPEE), expandable thermoplastic polyurethane (ETPU), ethylene vinyl acetate (EVA), extruded polyurethane (EPU), olefin block copolymers (OBCs), polyolefin elastomer (POE)and combinations thereof.

In an embodiment of the present disclosure, the step of providing the frame includes: filling the particles of the foam material having different types in at least one of the cavities.

In an embodiment of the present disclosure, the step of providing the frame includes: making at least one of the cavities have different depths or capacities.

In an embodiment of the present disclosure, the heat pressing step includes: making at least one of the cavities have different temperature.

According to the present disclosure, the shoe article includes the shoe-shaped knitted object and the plurality of foam structures. The shoe-shaped knitted object includes the shoe bottom face, where the shoe-shaped knitted object is woven by yarns. The foam structures are connected with the shoe bottom face in a heat pressing manner, where the foam structures are separated from each other, and each of the foam structures at least partially extends into the shoe bottom face of the shoe-shaped knitted object and is distributed between the yarns adjacent to the shoe bottom face.

In an embodiment of the present disclosure, the material of foam structures is selected from the group consisting of thermoplastic polyurethane (TPU), thermoplastic polyester elastomer (TPEE), expandable thermoplastic polyurethane (ETPU), ethylene vinyl acetate (EVA), extruded polyurethane (EPU), olefin block copolymers (OBCs), polyolefin elastomer (POE) and combinations thereof.

In an embodiment of the present disclosure, the foam structures are respectively provided with a positioning groove; the shoe article also includes an outsole structure; and the outsole structure is provided with a plurality of positioning convex blocks which extend into the positioning grooves and are connected with each other.

In an embodiment of the present disclosure, a plurality of foam convex blocks separated from each other of the foam structures have different heights or densities.

According to the present disclosure, an apparatus for manufacturing a shoe article includes the frame, the foot-shaped supporting member, and a heating apparatus. The frame is provided with a frame supporting surface including a plurality of cavities. The foot-shaped supporting member is provided with the supporting member bottom surface, and is arranged at the outer side of the frame supporting surface with the supporting member bottom surface facing the frame supporting surface. The heating apparatus can heat at least one of the frame and the foot-shaped supporting member.

### BRIEF DESCRIPTION OF THE DRAWINGS

FIG. 1 is a schematic flowchart of a method for manufacturing a shoe article according to an embodiment of the present disclosure.
FIG. 2A and FIG. 2B are schematic exploded diagrams of an apparatus for manufacturing a shoe article according to an embodiment.
FIG. 3A to FIG. 3E are schematic diagrams of steps of a method for manufacturing a shoe article according to an embodiment of the present disclosure.
FIG. 3F is a schematic diagram of a shoe article according to an embodiment of the present disclosure.
FIG. 4A is a schematic diagram of an apparatus for manufacturing a shoe article according to an embodiment.
FIG. 4B is a schematic section diagram taken along line AA" in FIG. 4A.
FIG. 5 is a schematic flowchart of a method for manufacturing a shoe article according to different embodiments of the present disclosure.
FIG. 6A to FIG. 6H are schematic diagrams of steps of a method for manufacturing a shoe article according to different embodiments of the present disclosure.
FIG. 6I is a schematic diagram of a shoe article according to different embodiments of the present disclosure.
FIG. 7 is a schematic diagram of an outsole structure in a shoe article according to an embodiment of the present disclosure.
FIG. 8 is a schematic diagram of a shoe article according to different embodiments of the present disclosure.

### DETAILED DESCRIPTION

By following specific embodiments and in conjunction with the drawings to describe the implementations of the connection components disclosed by the present disclosure, those skilled in the art can understand the advantages and effects of the present disclosure from the content disclosed in the description. However, the content disclosed below is not used to limit the scope of protection of the present disclosure, and those skilled in the art can implement the present disclosure with other different embodiments based on different viewpoints and applications without departing from the spirit of the present disclosure. In the accompanying drawings, the thickness of the layer, film, panel, area, etc. is enlarged for clarity. In the entire description, the same reference numerals in the accompanying drawings represent the same elements. It is to be understood that when an element such as a layer, film, area or substrate is referred to as "on" or "connected" to another element, it can be connected directly on or with another element, or an intermediate element can also be present. Conversely, when an element is referred to as "directly on" or "directly connected" to another element, no intermediate element is present. The "connection" as used herein can refer to physical and/or electrical connections. Further, the "electrical connection" or "coupling" can refer to the presence of other elements between the two elements.

It is to be understood that the terms "first", "second", "third", etc. can be used herein to describe various elements, components, areas, layers, and/or portions, but these elements, components, areas, and/or portions should not be limited by these terms. These terms are used only to distinguish one element, component, area, layer, or portion from another element, component, area, layer, or portion. Thus, the "first element", "component", "area", "layer", or "portion" discussed below can be referred to as the second element, component, area, layer, or portion without departing from the teachings herein.

In addition, relative terms such as "lower" or "bottom" and "upper" or "top" may be used herein to describe the relationship of one element with another element, as shown in the drawings. It is to be understood that the relative terms are intended to include different orientations of the apparatus other than the orientations shown in the figures. For example, if the apparatus in one figure is flipped, the element described as being on the "lower" side of the other element will be oriented on the "upper" side of the other element. Accordingly, the exemplary term "lower" may include the orientation of "lower" and "upper" depending on the particular orientation of the drawings. Similarly, if the apparatus in one figure is flipped, the element described as being "below" or "above" on the other element will be oriented "above" on the other element. Accordingly, the exemplary term "below" or "lower" may include the orientation of above and below.

The "about", "approximate", or "substantial" used herein includes an average of the values and a particular value determined by those of ordinary skill in the art within an acceptable range of deviations, taking into account a particular number of errors of measurements and measurement-related issues (i.e., the limitations of the measurement system). For example, the "about" may be expressed within one or more standard deviations of the values, or within ±30%, ±20%, ±10%, or ±5%. Further, the "about", "approximate", or "substantial" used herein may select a relatively acceptable range of deviations or standard deviations depending on optical, etch, or other properties, without applying all properties with one standard deviation.

The present disclosure relates to a shoe article and a method and apparatus for manufacturing the same. The shoe article may include various sports shoe types, such as jogging shoes, basketball shoes, baseball shoes, tennis shoes, football shoes, walking shoes, bicycle shoes, mountaineering shoes, training shoes and rugby shoes, and may also be applied to shoe types generally recognized as non-sports shoes, such as flat shoes, sandals, work shoes and dress shoes. Further, the concept disclosed by the shoe article may be applied to various shoe types.

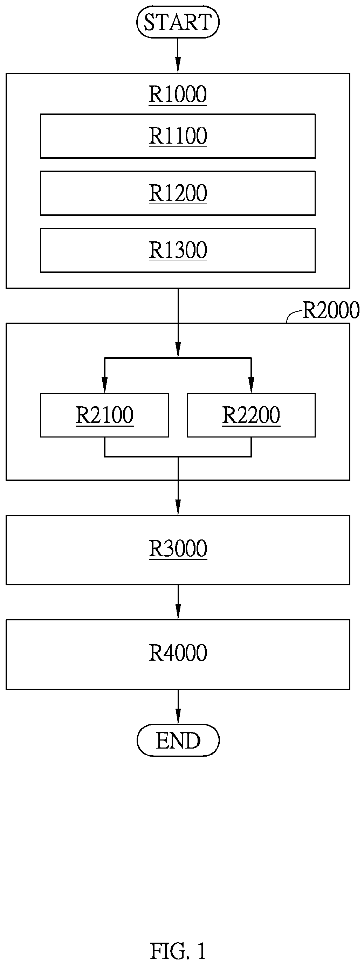

As shown in the schematic flowchart of the embodiment in FIG. 1, a method for manufacturing a shoe article according to the present disclosure includes, for example, a material preparing step R1000, a heat pressing step R2000, a cooling step R3000, and a separating step R4000.

Further, the material preparing step R1000 includes a step R1100 of providing a shoe-shaped knitted object having a shoe bottom face facing upward, a step R1200 of providing a frame, and a step R1300 of filling particles of a foam material in a cavity.

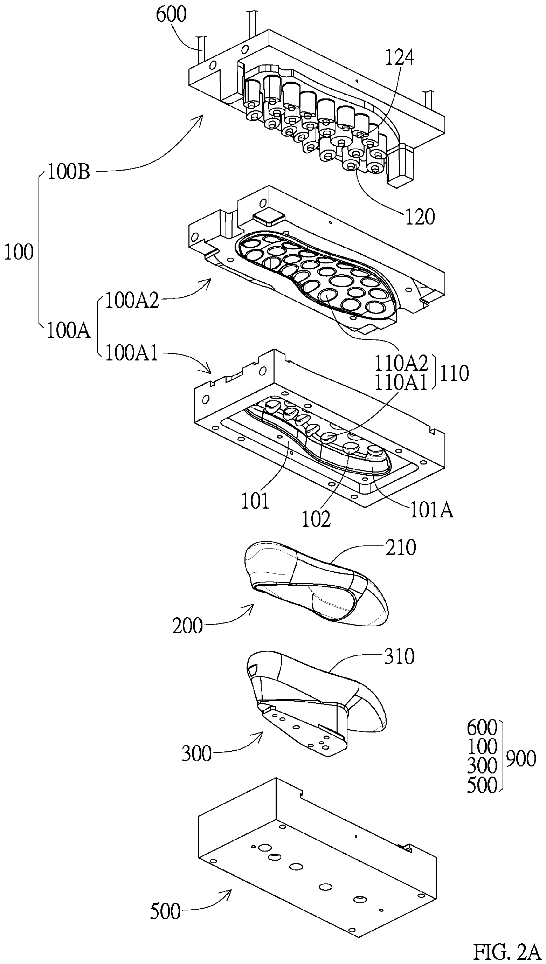

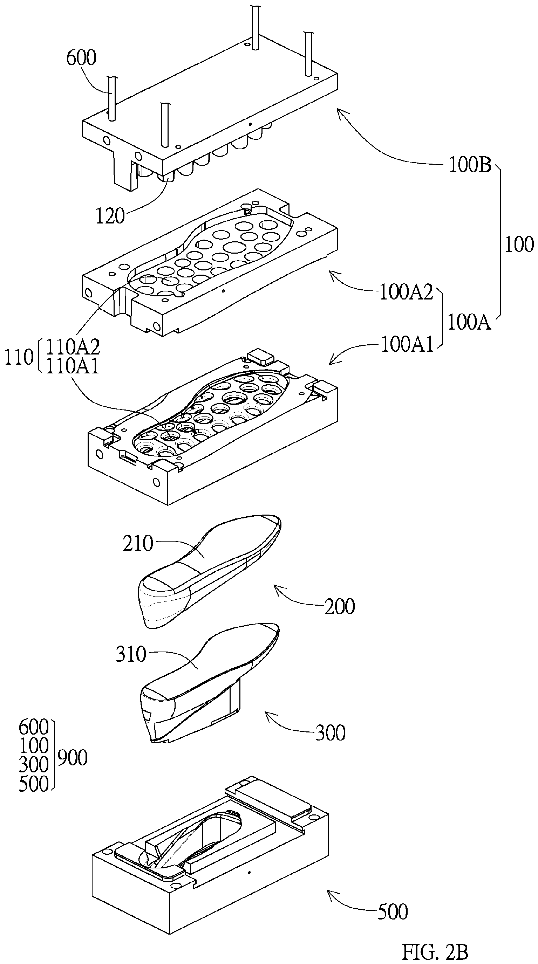

The shoe-shaped knitted object according to the present disclosure is a singlepiece article of a shoe structure having a vamp and a sole formed by weaving. As shown in embodiments in FIG. 2A and FIG. 2B, the shoe-shaped knitted object 200 includes a shoe bottom face 210, and a frame 100 has a frame supporting surface 101 including a plurality of cavities 102. The frame supporting surface 101 also includes a supporting concave part 101A, the cavities 102 are arranged in the supporting concave part 101A, and the cavities 102 are separated from each other. More specifically, the frame 100 includes a middle frame 100A and a convex column module 100B. The middle frame 100A is arranged above the shoe-shaped knitted object 200, and includes the frame supporting surface 101 facing the shoe bottom face 210 and a plurality of middle frame holes 110 arranged in the frame supporting surface 101. In order to make the subsequent separating step smoother, the middle frame 100A may include a plurality of components that can be separated from each other, and each component includes a plurality of corresponding holes to form the middle frame holes 110 together when combined. For example, the middle frame 100A may include a first middle frame 100A1 and a second middle frame 100A2, the first middle frame 100A1 includes a plurality of first holes 110A1, and the second middle frame 100A2 includes a plurality of second holes 110A2. When the first middle frame 100A1 and the second middle frame 100A2 are combined up and down to form the middle frame 100A, each of the first holes 110A1 is communicated with one of the second holes 110A2, thereby forming the middle frame holes 110.

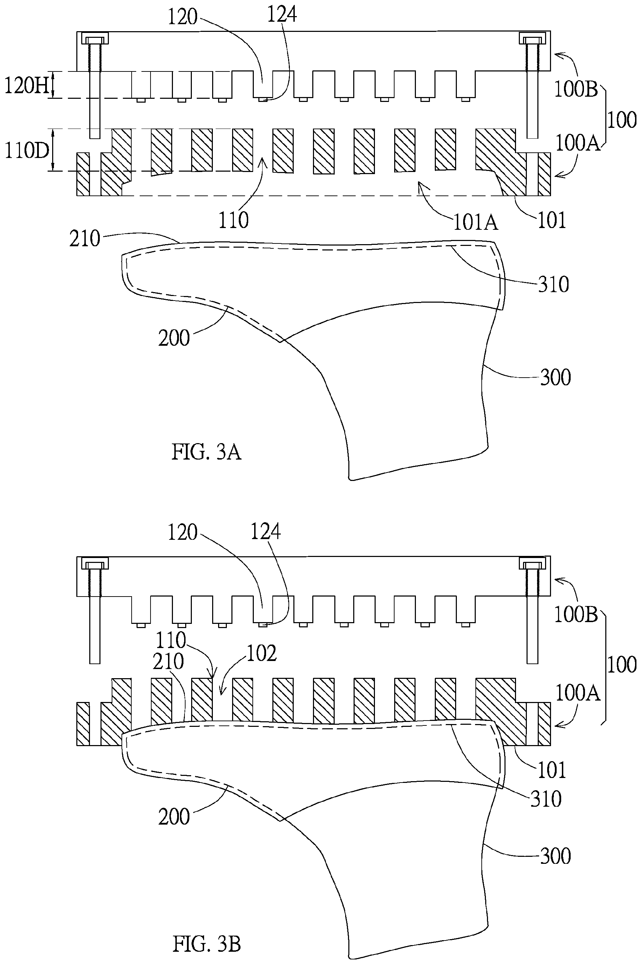

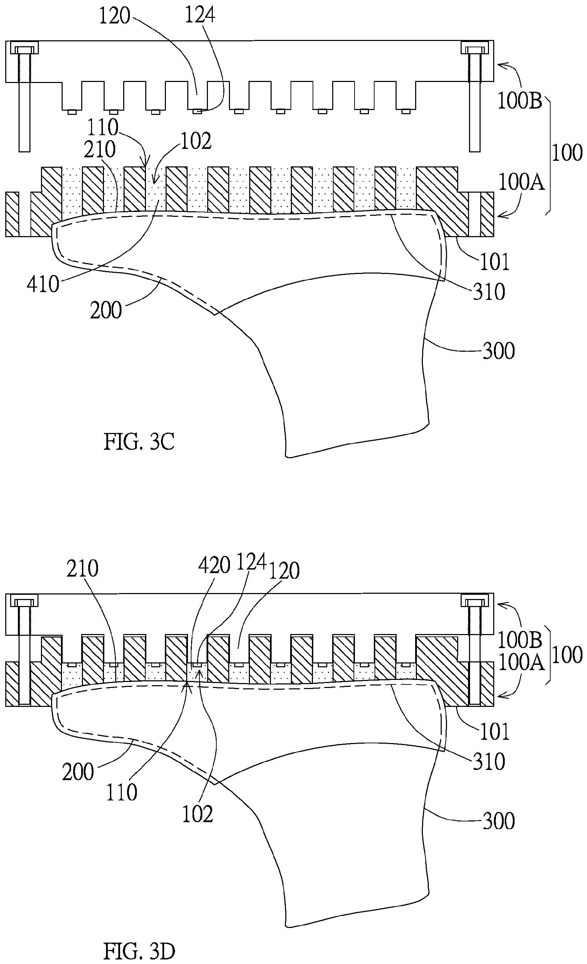

As shown in embodiments in FIG. 3A and FIG. 3B, the vertical projection of the shoe bottom face 210 on the frame supporting surface 101 is overlapped with the supporting concave part 101A. Further, as shown in the embodiment in FIG. 3B, the frame 100 and the shoe-shaped knitted object 200 can be close to each other until the shoe bottom face 210 is abutted against the frame supporting surface 101, and the shoe bottom face 210 is just embedded into the supporting concave part 101A and is attached to the frame supporting surface 101, so that one end of each middle frame hole 110 close to the shoe-shaped knitted object 200 is closed by the shoe bottom face 210 to form a plurality of cavities 102. As shown in the embodiment in FIG. 3C, when the shoe bottom face 210 is attached to the frame supporting surface 101 to form the plurality of cavities 102, particles 410 of a foam material can be filled in the plurality of cavities 102. In one embodiment, the step of providing the shoe-shaped knitted object 200 includes: a foot-shaped supporting member 300 having a supporting member bottom surface 310 is provided, the shoe-shaped knitted object 200 is sleeved on the foot-shaped supporting member 300 and the shoe bottom face 210 is located below the supporting member bottom surface 310. A stabilizing module 500 (see FIG. 2A and FIG. 2B) can also be arranged below the foot-shaped supporting member 300, and the supporting member 300 is at least partially embedded in the stabilizing module to be more stable when being pressed. On the other hand, as shown in the embodiment in FIG. 3A, the convex column module 100B is arranged above the middle frame 100A and includes a plurality of convex columns 120, each convex column 120 corresponds to one of middle frame holes 110, the height 120H of each convex column 120 is smaller than the depth 110D of the corresponding middle frame hole 110, and the convex column module 100B is movable relative to the middle frame 100A, so that the convex columns 120 can respectively extend into or leave the corresponding middle frame holes 110.

As shown in FIG. 1, the heat pressing step R2000 includes: heating in a step R2100 and pressurizing in a step R2200 are simultaneously carried out after the material preparing step R1000. The step R2100 includes: at least one of the frame and the shoe-shaped knitted object is heated to make the particles of the foam material become a semi-solid state foam material. For example, the frame can be heated by the convex column module containing a heating apparatus (such as an electric heating coil) or a heating apparatus (such as a heating column) in contact with the convex column module, or the shoe-shaped knitted object can be heated by the foot-shaped supporting member containing a heating coil or a heating column in contact with the foot-shaped supporting member. The foam material is selected from a group formed by thermoplastic polyurethane (TPU), thermoplastic polyester elastomer (TPEE), expandable thermoplastic polyurethane (ETPU), ethylene vinyl acetate (EVA), extruded polyurethane (EPU), olefin block copolymers (OBCs), polyolefin elastomer (POE) and combinations thereof. In this step, heating is needed to make the particles of the foam material filled in the cavities become the semi-solid state foam material. For example, for particles of the TPU foam material with a melting point of about 110°C, the frame can be heated to 130°C to 140°C, then a heat source is turned off, and after heat energy is conducted to the particles of the foam material in the cavities, the foam material becomes the semi-solid state foam material.

The step R2200 includes: a force is applied to at least one of the convex column module and the shoe-shaped knitted object to approach the other, so that the convex column is close to the shoe bottom face. As shown in the embodiment in FIG. 3D, the middle frame 100A can be moved by applying a force to the convex column module 100B, so that the convex columns 120 respectively extend into the corresponding middle frame holes 110, and a pressure is applied to the foam materials in the cavities 102. Based on the above, after the heat pressing step R2000, the space occupied by the foam materials in the cavities 102 is reduced and is connected with the shoe bottom face 210.

As shown in the embodiment in FIG. 1, the cooling step R3000 includes: the frame and the shoe-shaped knitted object are cooled after the heat pressing step to solidify the semi-solid state foam material to form a plurality of foam structures connected with the shoe bottom face in positions corresponding to cavities on the shoe bottom face. More specifically, as shown in the embodiment in FIG. 3D, after the semi-solid state foam material is solidified, a plurality of foam structures 420 such as foam convex blocks connected with the shoe bottom face 210 are formed in positions corresponding to cavities 102 on the shoe bottom face 210, and the foam structures 420 are separated from each other. In one embodiment, the temperature can be reduced by a natural passive cooling mode. In different embodiments, the frame or the foot-shaped supporting member can be cooled by an active cooling mode such as air cooling or liquid cooling. In one embodiment, the shoe-shaped knitted object 200 is formed by weaving yarns, and the foam structures 420 are connected with the shoe bottom face 210 by a heat pressing mode, so each of the foam structures 420 at least partially extends into the shoe bottom face 210 of the shoe-shaped knitted object 200 and is distributed between the yarns adjacent to the shoe bottom face 210. Therefore, the foam structures 420 can be connected with the shoe bottom face 210 more firmly, the problems of degumming and the like caused by foaming by using an adhesive traditionally are avoided, the durability is better, and the process time can be shortened.

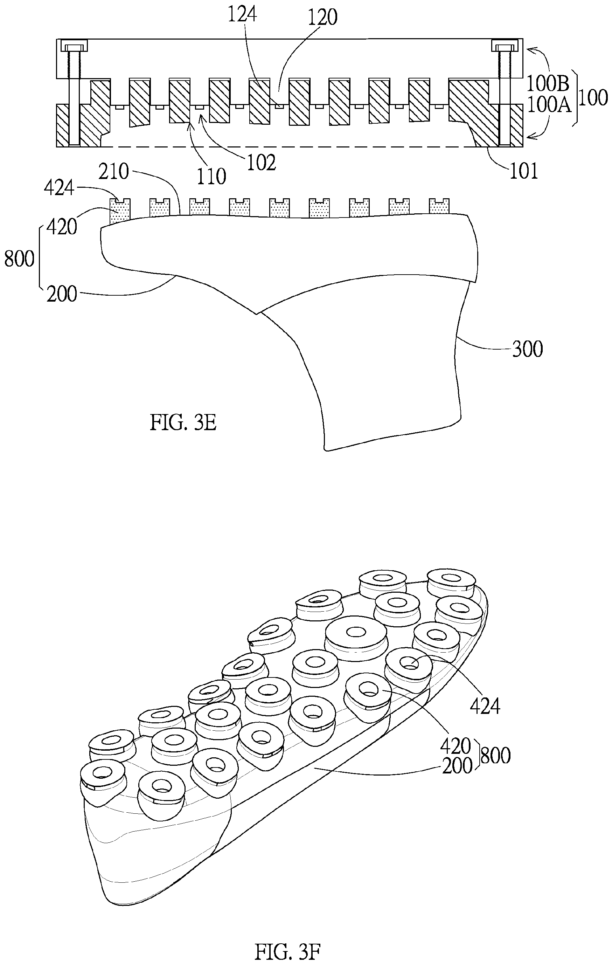

As shown in the embodiment in FIG. 1, the separating step R4000 includes: a force is applied to at least one of the frame and the shoe-shaped knitted object to move away from the other, and the foam structures and the shoe-shaped knitted object are separated from the frame together. More specifically, as shown in the embodiment in FIG. 3E, a force can be applied to the frame 100. The frame is further separated from the shoe-shaped knitted object 200. Therefore, the shoe article 800 including the shoe-shaped knitted object 200 and the plurality of foam structures 420 is obtained. Top convex blocks 124 can be further arranged on the top surfaces of convex columns 120 so that positioning grooves 424 can be formed in the top surfaces of the foam structures 420. As shown in the embodiment in FIG. 3F, the foam structures 420 are separated from one another. Due to the fact that the foam structures 420 are formed by foam materials through the heat pressing step, the material components are the same, but the properties such as elasticity, height, density and abrasion resistance can be changed.

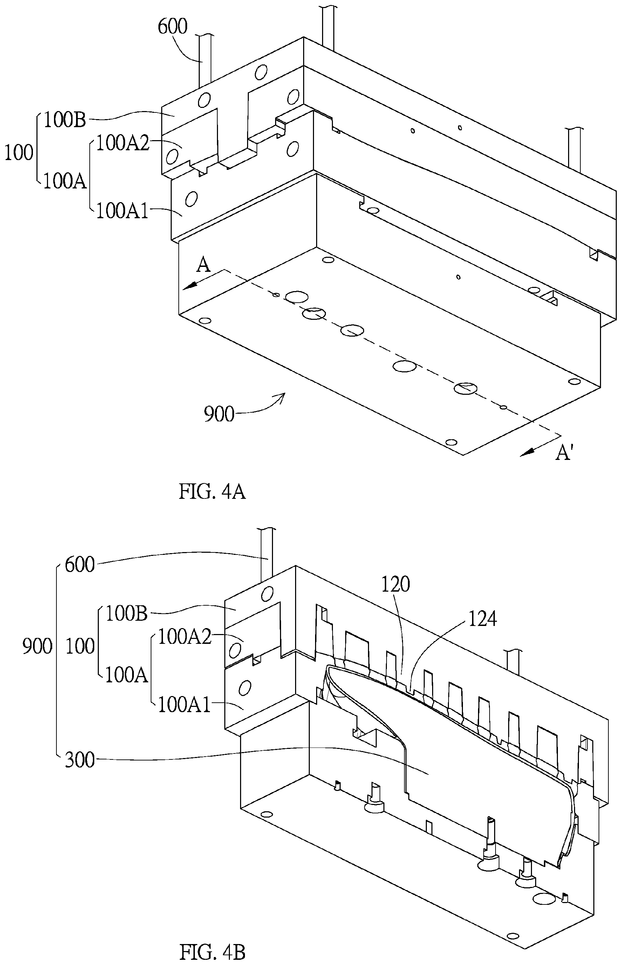

In different embodiments, in order to meet individual differentiation requirements, the foam structures with required properties can be formed in all the or a specific position by, for example, changing the material quality of the foam material, using the frame having different cavity sizes and distribution, filling the particles of the foam material having different kinds in at least one cavity to change the foam material in partial position, making at least one of the cavities have different depths or capacities to change the pressure of the foam material in partial position during heat pressing, and making at least one cavity have different temperature during heat pressing. From different angles, as shown in embodiments in FIG. 4A and FIG. 4B, the apparatus 900 for manufacturing a shoe article according to the present disclosure includes a frame 100, a foot-shaped supporting member 300 and a heating apparatus 600 such as a heating column. Due to the fact that the apparatus 900 is not large in size and can operate independently, the apparatus can be placed in a small manufacturing place close to a retail store or even in the retail store. Therefore, the frame 100, the foam material and the shoe-shaped knitted object 200 can be replaced correspondingly according to the requirements of a client, heat pressing parameters such as temperature are set, and the shoe article meeting the individual differentiation requirement is manufactured rapidly.

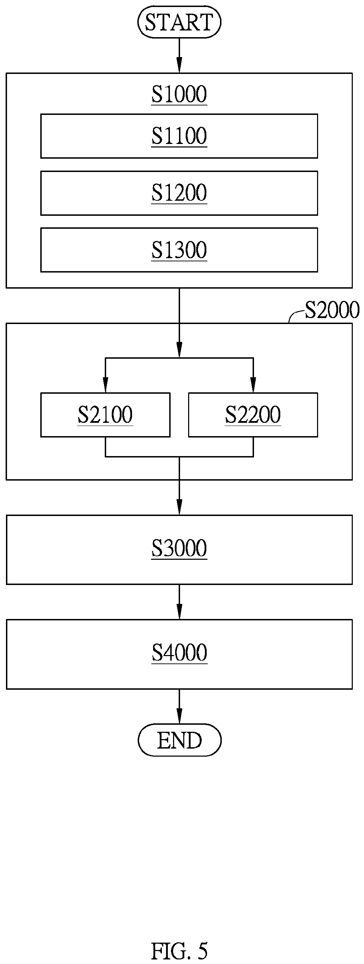

In various embodiments, the shoe article is not limited to be under the frame, and the cavities for filling particles of the foam material are not limited to be formed by the shoe bottom face and the middle frame. As shown in the schematic flowchart of the embodiment in FIG. 5, the method for manufacturing a shoe article according to the present disclosure includes, for example, a material preparing step S1000, a heat pressing step S2000, a cooling step S3000, and a separating step S4000.

Further, the material preparing step S1000 includes a step S1100 of providing the frame having the frame supporting surface including the plurality of cavities, a step S1200 of filling the particles of a foam material in the plurality of cavities, and a step S1300 of providing the shoe-shaped knitted object. The steps can be performed in sequence as step S1100, step S1200, step S1300, or step S1100, or step S1300, step S1200, or step S1300, step S1100, step S1200. In other words, the frame or the shoe-shaped knitted object can be provided firstly, or the particles of the foam material can be filled after the frame is provided, namely, the particles of the foam material or the frame and the shoe-shaped knitted object are provided.

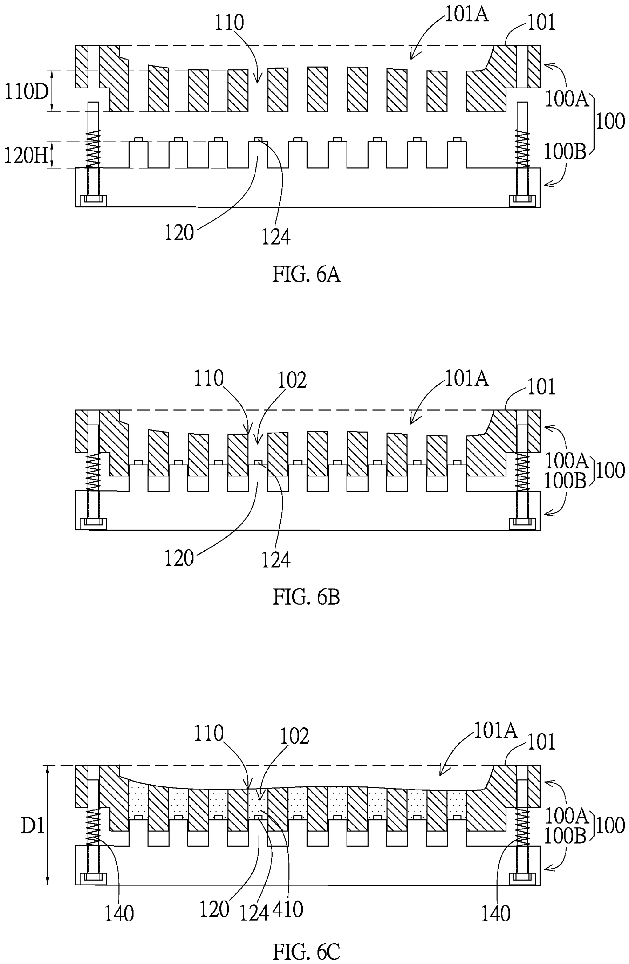

As shown in embodiments in FIG. 6A and FIG. 6B, the convex column module 100B is arranged under the middle frame 100A and includes the plurality of convex columns 120. Each convex column 120 corresponds to one of middle frame holes 110. As shown in embodiments in FIG. 6A, the height 120H of each convex column 120 is smaller than the depth 110D of the corresponding middle frame hole 110. As shown in the embodiment in FIG. 6B, the middle frame 100A is movable relative to the convex column module 100B, so that the convex columns 120 can respectively extend into the corresponding middle frame holes 110 to form cavities 102, or the convex columns 120 can leave the middle frame holes 110. As shown in the embodiment in FIG. 6C, when the convex columns 120 respectively extend into the corresponding middle frame holes 110 to form the cavities 102, particles 410 of foam materials can be filled in the plurality of cavities 102. In one embodiment, the frame 100 can include an elastic apparatus 140 such as a spring. The elastic apparatus is arranged between the middle frame 100A and the convex column module 100B, and provides an upward elastic force to support the middle frame 100A and the convex column module 100B to keep a first distance D1. The convex columns 120 respectively extend into the corresponding holes 110. The distance between the middle frame 100A and the convex column module 100B refers to the distance between the top surface of the middle frame 100A and the convex column module 100B.

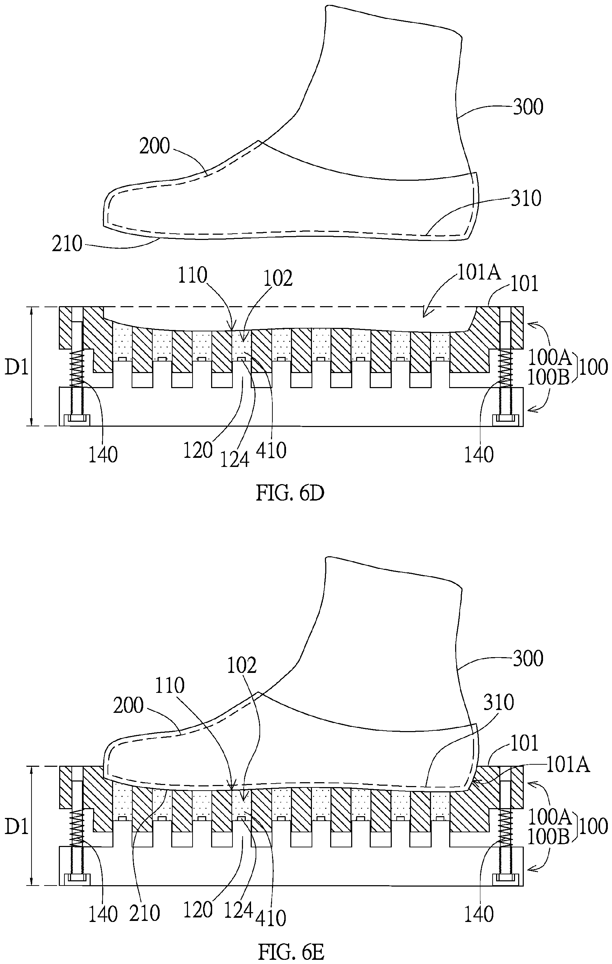

The shoe-shaped knitted object according to the present disclosure is a singlepiece article of a shoe structure having a vamp and a sole formed by weaving. As shown in embodiments in FIG. 6A and FIG. 6B, the shoe-shaped knitted object 200 includes a shoe bottom face 210, and is arranged above the frame supporting surface 101, and the shoe bottom face 210 faces the frame supporting surface 101. As shown in the embodiment in FIG. 6D, the vertical projection of the shoe bottom face 210 on the frame supporting surface 101 is overlapped with the supporting concave part 101A. Further, as shown in the embodiment in FIG. 6E, the frame 100 and the shoe-shaped knitted object 200 can be close to each other until the shoe bottom face 210 is abutted against the frame supporting surface 101, and the shoe bottom face 210 is just embedded into the supporting concave part 101A and is attached to the frame supporting surface 101. In one embodiment, the step of providing the shoe-shaped knitted object 200 includes: a foot-shaped supporting member 300 having a supporting member bottom surface 310 is provided, the shoe-shaped knitted object 200 is sleeved on the foot-shaped supporting member 300 and the shoe bottom face 210 is located below the supporting member bottom surface 310. The stabilizing module 500 (as shown in FIG. 2A and FIG. 2B) can also be arranged above the foot-shaped supporting member 300 so that the downward force applied to the shoe-shaped knitted object 200 is more uniform.

As shown in FIG. 5, the heat pressing step S2000 includes: heating in a step S2100 and pressurizing in a step S2200 are simultaneously carried out after the material preparing step S1000. The step S2100 includes: at least one of the frame and the shoe-shaped knitted object is heated to make the particles of the foam material become a semi-solid state foam material. For example, the frame can be heated by the convex column module containing a heating apparatus (such as an electric heating coil) or a heating apparatus (such as a heating column) in contact with the convex column module, or the shoe-shaped knitted object can be heated by the foot-shaped supporting member containing a heating coil or a heating column in contact with the foot-shaped supporting member. In this step, heating is needed to make the particles of the foam material filled in the cavities become the semi-solid state foam material. For example, for particles of the TPU foam material with a melting point of about 110°C, the frame can be heated to 130°C to 140°C, then a heat source is turned off, and after heat energy is conducted to the particles of the foam material in the cavities, the foam material becomes the semi-solid state foam material.

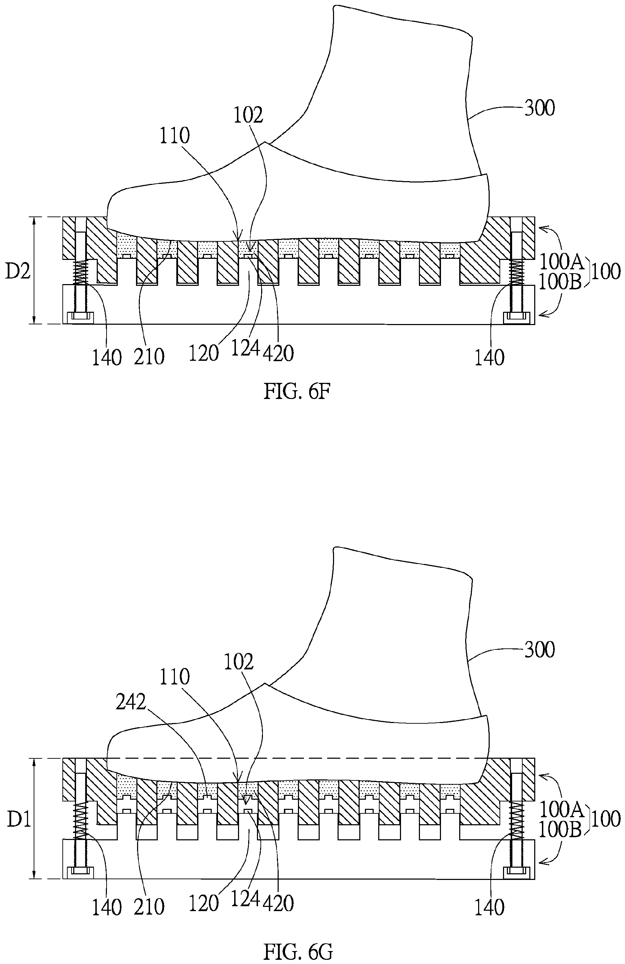

The step S2200 includes: a force is applied to at least one of the frame and the shoe-shaped knitted object to approach the other, so that the shoe bottom face is in contact with at least a part of the foam material. More specifically, as shown in the embodiment in FIG. 6D, the upper parts of particles 410 of the foam material are exposed from openings of the cavities 102. As shown in the embodiment in FIG. 6E, a force is applied to the foot-shaped supporting member 300 to sleeve the shoe-shaped knitted object 200 on the foot-shaped supporting member to approach the frame 100 until the shoe bottom face 210 is abutted against the frame supporting surface 101, and the shoe bottom face 210 is just embedded into the supporting concave part 101A to be attached to the frame supporting surface 101. At the moment, the shoe bottom face 210 is in contact with the particles 410 of the foam material exposed from the cavities 102. As shown in the embodiment in FIG. 6F, the space occupied by the foam material is reduced under the condition that the particles of the foam material filled in the cavities are heated to become the semi-solid state foam material, so that if the downward thrust force greater than the upward elastic force is further applied to the shoe-shaped knitted object 200, the elastic apparatus 140 can be compressed to enable the shoe-shaped knitted object 200 to be abutted against the middle frame 100A. The middle frame 100A is pushed to enable that a second distance D2 between the middle frame and the convex column module 100B is smaller than the first distance D1, and convex columns 120 respectively extend into corresponding holes 110 to apply a pressure to the foam material in the cavities 102. Based on the above, after the heat pressing step S2000, the space occupied by the foam materials in the cavities 102 is reduced and is connected with the shoe bottom face 210.

As shown in the embodiment in FIG. 5, the cooling step S3000 includes: the frame and the shoe-shaped knitted object are cooled after the heat pressing step to solidify the semi-solid state foam material to form a plurality of foam structures connected with the shoe bottom face in positions corresponding to cavities on the shoe bottom face. More specifically, as shown in embodiments in FIG. 6G, after the semi-solid state foam material is solidified, the plurality of foam structures 420 connected with the shoe bottom face 210 are formed in positions corresponding to the cavities 102 on the shoe bottom face 210, and the foam structures 420 are separated from each other. In one embodiment, the temperature can be reduced by a natural passive cooling mode. In different embodiments, the frame or the foot-shaped supporting member can be cooled by an active cooling mode such as air cooling or liquid cooling. In one embodiment, the shoe-shaped knitted object 200 is formed by weaving yarns, and the foam structures 420 are connected with the shoe bottom face 210 by a heat pressing mode, so each of the foam structures 420 at least partially extends into the shoe bottom face 210 of the shoe-shaped knitted object 200 and is distributed between the yarns adjacent to the shoe bottom face 210. Therefore, the foam structures 420 can be connected with the shoe bottom face 210 more firmly, the problems of degumming and the like caused by foaming by using an adhesive traditionally are avoided, the durability is better, and the process time can be shortened.

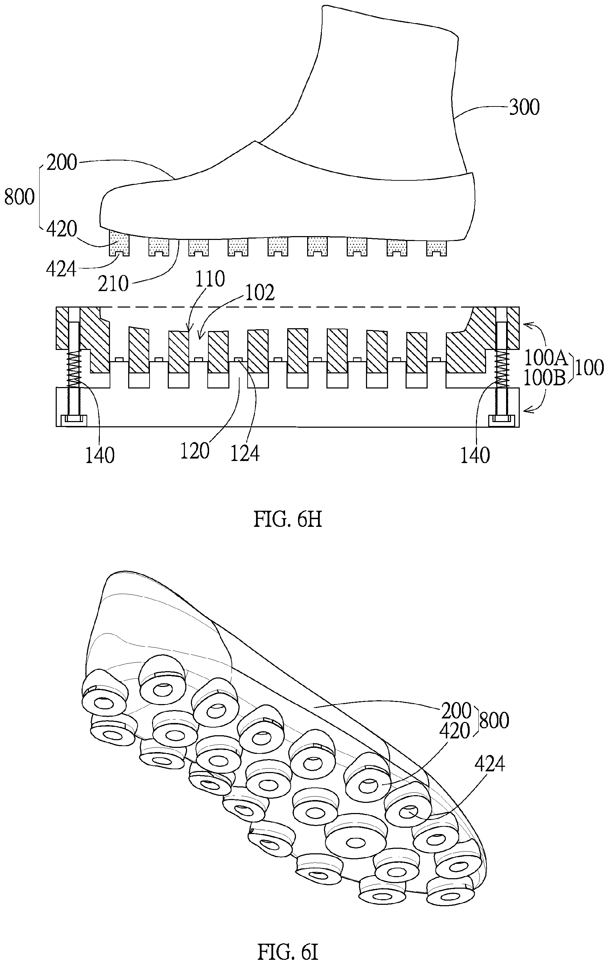

As shown in the embodiment in FIG. 5, the separating step S4000 includes: a force is applied to at least one of the frame and the shoe-shaped knitted object to move away from the other, and the foam structures and the shoe-shaped knitted object are separated from the frame together. More specifically, as shown in the embodiment in FIG. 6G, when the downward thrust force is removed, the middle frame 100A can be pushed to move to a position where the middle frame reaches the first distance D1 from the convex column module 100B by the upward elastic force of the elastic apparatus 140, and the foam structures 420 are separated from the convex columns 120, namely the foam structures 420 do not make contact with the convex columns 120. Then, as shown in the embodiment in FIG. 6H, a force can be applied to the shoe-shaped knitted object 200. The shoe-shaped knitted object is further separated from the middle frame 100A. Therefore, the shoe article 800 including the shoe-shaped knitted object 200 and the plurality of foam structures 420 is obtained. As shown in the embodiment in FIG. 6I, the foam structures 420 are separated from one another.

Based on the above, the method for manufacturing a shoe article according to the present disclosure is simple in steps, and can save working hours and improve the manufacturing efficiency. The shoe article manufactured by the method can be simply composed of the shoe-shaped knitted object and the foam structures, so that the shoe article has the advantages of good elasticity, material saving, light weight, multiple shapes, good durability, no deterioration and falling of the adhesive, full recycling and the like. In addition, the individual differentiation requirements can be met.

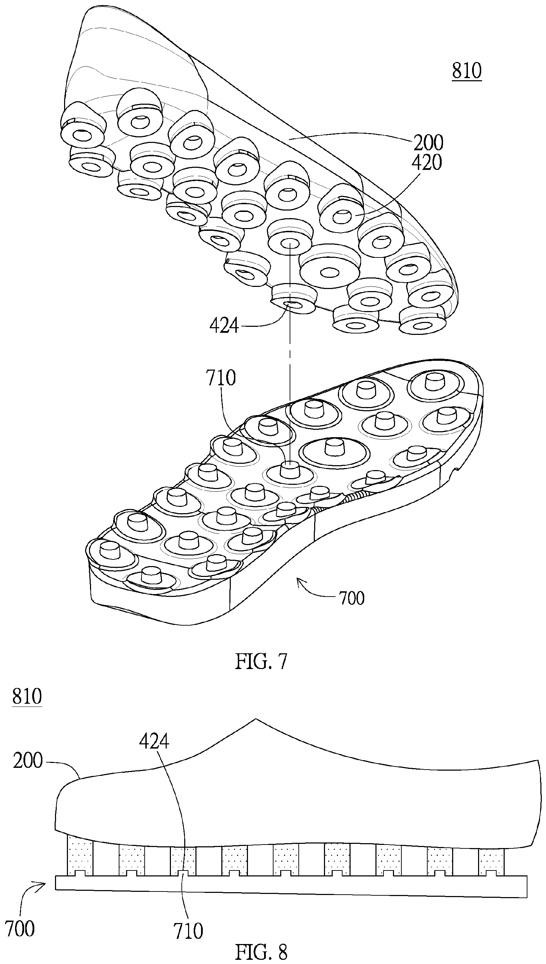

As shown in embodiments in FIG. 7 and FIG. 8, the shoe article 810 further includes an outsole structure 700. The outsole structure 700 is provided with a plurality of positioning convex blocks 710 which extend into the positioning grooves 424 and are connected with one another. In this way, the positioning convex blocks 710 can be easily inserted into the corresponding positioning grooves 424 in an alignment mode, and the positioning grooves 424 and the positioning convex blocks 710 which are connected in a matched mode are used for increasing the connection stability and the connection area therebetween, so that the outsole structure 700 can be more firmly connected with the foam structure 420. Further, the outsole structure 700 is a first layer of part in contact with the ground and is mainly used for increasing the grip force, the abrasion resistance and the skid resistance of the bottom of the shoe article 810 in contact with the ground. In one embodiment, in order to improve the grip force, the abrasion resistance and the skid resistance of the outsole structure 700, the material and the hardness of the outsole structure 700 can be different from those of the foam structure 420, and the outsole structure 700 is relatively hard in material, relatively good in abrasion resistance and skid resistance.

Although the foregoing description and schema have revealed the preferred embodiments of the present disclosure, it should be understood that various additions, modifications and substitutions can be used in the preferred embodiments of the present disclosure without departing from the spirit and scope of the principle of the present disclosure as defined in the scope of the appended patent application. Those who are familiar with the technical field of the present disclosure will realize that the present disclosure can be used to modify various forms, structures, arrangements, proportions, materials, elements and components. Therefore, the embodiments disclosed herein should be considered to illustrate the present disclosure, not to limit it. The scope of the present disclosure shall be defined by the scope of the appended patent application and encompass legal equivalents of the present disclosure, not limited to the previous description.

## Claims

1. A method for manufacturing a shoe article, comprising:
a material preparing step comprising:
providing a shoe-shaped knitted object having a shoe bottom face;
providing a frame having a plurality of middle frame holes; and
filling particles of a foam material in the middle frame holes;
a heat pressing step comprising simultaneously carrying out the following steps after the material preparing step:
heating at least one of the frame and the shoe-shaped knitted object to make the particles of the foam material become a semi-solid state foam material; and
applying a force to make the semi-solid state foam material substantially apply pressure onto the shoe bottom face;
a cooling step comprising cooling the frame and the shoe-shaped knitted object after the heat pressing step to solidify the semi-solid state foam material to form a plurality of foam structures connected with the shoe bottom face in positions corresponding to middle frame holes, the foam structures being separated from each other; and
a separating step comprising applying a force to at least one of the frame and the shoe-shaped knitted object to move away from the other, and making the foam structures and the shoe-shaped knitted object separate from the frame together.

2. A method for manufacturing a shoe article, comprising:
a material preparing step comprising:
providing a shoe-shaped knitted object having a shoe bottom face facing upward;
providing a frame comprising:
a middle frame being arranged above the shoe-shaped knitted object and comprising a frame supporting surface facing the shoe bottom face and a plurality of middle frame holes formed in the frame supporting surface, the frame supporting surface abutted against the shoe bottom face, so that one end of each middle frame hole close to the shoe-shaped knitted object being closed by the shoe bottom face to form a plurality of cavities; and
a convex column module being arranged above the middle frame and comprising a plurality of convex columns, each convex column corresponding to one of the middle frame holes, the height of each convex column being smaller than the depth of the corresponding middle frame hole, and the convex column module being movable relative to the middle frame, so that the convex columns respectively extending into or leaving the corresponding middle frame holes; and
filling particles of a foam material in the cavities;
a heat pressing step comprising simultaneously carrying out the following steps after the material preparing step:
heating at least one of the frame and the shoe-shaped knitted object to make the particles of the foam material become a semi-solid state foam material; and
applying a force to at least one of the convex column module and the shoe-shaped knitted object to approach the other, so that the convex column being close to the shoe bottom face;
a cooling step comprising cooling the frame and the shoe-shaped knitted object after the heat pressing step to solidify the semi-solid state foam material to form the plurality of foam structures connected with the shoe bottom face in positions corresponding to the cavities on the shoe bottom face, the foam structures being separated from each other; and
a separating step comprising applying a force to at least one of the frame and the shoe-shaped knitted object to move away from the other, and making the foam structures and the shoe-shaped knitted object separate from the frame together.

3. A method for manufacturing a shoe article, comprising:
a material preparing step comprising:
providing a frame comprising a frame supporting surface having a plurality of cavities separated from each other;
filling particles of a foam material in the cavities; and
providing a shoe-shaped knitted object having a shoe bottom face arranged above the frame supporting surface, and the shoe bottom face facing the frame supporting surface;
a heat pressing step comprising simultaneously carrying out the following steps after the material preparing step:
heating at least one of the frame and the shoe-shaped knitted object to make the particles of the foam material become a semi-solid state foam material; and
applying a force to at least one of the frame and the shoe-shaped knitted object to approach the other, so that the shoe bottom face in contact with at least a part of the foam material;
a cooling step comprising cooling the frame and the shoe-shaped knitted object after the heat pressing step to solidify the semi-solid state foam material to form the plurality of foam structures connected with the shoe bottom face in positions corresponding to the cavities on the shoe bottom face, the foam structures being separated from each other; and
a separating step comprising applying a force to at least one of the frame and the shoe-shaped knitted object to move away from the other, and making the foam structures and the shoe-shaped knitted object separate from the frame together.

4. The method according to claim 3, wherein the frame supporting surface comprises a supporting concave part, and the cavities are formed in the supporting concave part.

5. The method according to claim 3, wherein the frame comprises:
a middle frame comprising the frame supporting surface and the plurality of middle frame holes formed in the frame supporting surface; and
a convex column module being arranged below the middle frame and comprising a plurality of convex columns, each convex column corresponding to one of the middle frame holes, the height of each convex column being smaller than the depth of the corresponding middle frame hole, and the middle frame being movable relative to the convex column module, so that the convex columns respectively extending into the corresponding middle frame holes to form the cavities, or the convex columns being separated from the middle frame holes.

6. The method according to claim 5, wherein the frame further comprises an elastic apparatus which is arranged between the middle frame and the convex column module and provides an upward elastic force to support the middle frame and the convex column module to keep a first distance, and the convex columns respectively extend into the corresponding middle frame holes.

7. The method according to claim 6, wherein
the heat pressing step comprises: applying a downward thrust force which is larger than the upward elastic force to the shoe-shaped knitted object, so that the shoe-shaped knitted object is abutted against the middle frame, the middle frame is pushed to ensure thatthe distance between the middle frame and the convex column module is smaller than the first distance, and the convex columns respectively extend into the corresponding middle frame holes; and
the separating step comprises: removing the downward thrust force, pushing the middle frame to move to a position where the middle frame reaches the first distance from the convex column module by the upward elastic force, and enabling the foam structures to leave the convex columns.

8. The method according to claim 1, wherein the step of providing the shoe-shaped knitted object comprises:
providing a foot-shaped supporting member having a supporting member bottom surface; and
sleeving the shoe-shaped knitted object over the foot-shaped supporting member, and the shoe bottom face being outside the supporting member bottom surface.

9. The method according to claim 1, wherein the foam material is selected from the group consisting of thermoplastic polyurethane (TPU), thermoplastic polyester elastomer (TPEE), expandable thermoplastic polyurethane (ETPU), ethylene vinyl acetate (EVA), extruded polyurethane (EPU), olefin block copolymers (OBCs), polyolefin elastomer (POE)and combinations thereof.

10. The method according to claim 2, wherein the step of providing the frame comprises: filling the particles of the foam material having different types in at least one of the cavities.

11. The method according to claim 2, wherein the step of providing the frame comprises: making at least one of the cavities have different depths or capacities.

12. The method according to claim 2, wherein the heat pressing step comprises:
making at least one of the cavities have different temperature.

13. A shoe article, comprising:
a shoe-shaped knitted object having a shoe bottom face, the shoe-shaped knitted object being woven by yarns; and
a plurality of foam structures which are connected with the shoe bottom face in a heat pressing manner, the foam structures being separated from each other, and each of the foam structures at least partially extending into the shoe bottom face of the shoe-shaped knitted object and being distributed between the yarns adjacent to the shoe bottom face.

14. The shoe article according to claim 13, wherein the material of foam structures is selected from the group consisting of thermoplastic polyurethane (TPU), thermoplastic polyester elastomer (TPEE), expandable thermoplastic polyurethane (ETPU), ethylene vinyl acetate (EVA), extruded polyurethane (EPU), olefin block copolymers (OBCs), polyolefin elastomer (POE) and combinations thereof.

15. The shoe article according to claim 13, wherein the plurality of foam structures are respectively provided with a positioning groove; the shoe article also comprises an outsole structure; and the outsole structure is provided with a plurality of positioning convex blocks which extend into the positioning grooves and are connected with each other.

16. The shoe article according to claim 13, wherein a plurality of foam convex blocks separated from each other of the foam structures have different heights or densities.

17. An apparatus for manufacturing a shoe article, comprising:
a frame which is provided with a frame supporting surface comprising a plurality of cavities, the frame supporting surface comprising a supporting concave part, and the cavities are formed in the supporting concave part;
a foot-shaped supporting member which is provided with a supporting member bottom surface, and is arranged at the outer side of the frame supporting surface with the supporting member bottom surface facing the frame supporting surface; and
a heating apparatus which can heat at least one of the frame and the foot-shaped supporting member.

18. The apparatus according to claim 17, wherein the frame comprises:
a middle frame comprising a plurality of middle frame holes;
a convex column module which is arranged on the other side of the middle frame relative to a foot-shaped supporting member and comprises a plurality of convex columns, each convex column corresponding to one of the holes, the height of each convex column being smaller than the depth of the corresponding hole, and the middle frame being movable relative to the convex column module, so that the convex columns respectively extending into the corresponding middle frame holes to form the cavities, or the convex columns being separated from the middle frame holes.

19. The apparatus according to claim 18, wherein the convex column module is arranged below the middle frame; and the frame further comprises an elastic apparatus which is arranged between the middle frame and the convex column module and provides an upward elastic force to support the middle frame and the convex column module to keep a first distance, and the convex columns respectively extend into the corresponding middle frame holes.

20. The apparatus according to claim 17, wherein the cavities have different depths or capacities.
